# EUROPEAN PATENT SPECIFICATION

(11) **EP 2 420 846 B1**
(45) Date of publication and mention of the grant of the patent: **23.09.2020**
(21) Application number: 11005891.4
(22) Date of filing: 19.07.2011
(51) Int. Cl.: G01N 35/10, G01N 21/25, G01N 31/22, G01N 21/78

(54) **Chemical analysis apparatus**
Chemische Analysevorrichtung
Appareil d'analyse chimique

(30) Priority: 20.08.2010 EP 10008720; 27.05.2011 EP 11004360
(43) Date of publication of application: 22.02.2012
(73) Proprietor: ABB Schweiz AG, 5400 Baden (CH)
(72) Inventor: Greensted, Charles, Gloucestershire Cheltenham GL52 6HG (GB); D' Costa, Eric, Wotton-under-Edge Gloucestershire GL 12 7PS (GB); Williams, Katherine, Dr., Gloucestershire, GL5 3LU (GB); Bhachoo, Sunny, Brockworth Gloucestershire GL3 4DD (GB)
(74) Representative: Maiwald Patent- und Rechtsanwaltsgesellschaft mbH

(56) References cited:
- US-A- 4 853 336
- US-A- 6 149 882
- US-A1- 2007 116 601
- US-A1- 2007 292 308
- US-B1- 6 374 684
- Stephen Wayne Hillard ET AL: "DEVELOPMENT AND CHARACTERIZATION OF A STOPPED-FLOW- BYPASS ANALYSIS SYSTEM WITH APPLICATIONS TO BIOCHEMICAL MEASUREMENTS submitted to the Faculty of Virginia Polytechnic Institute and State University in partial fulfillment of the requirements for the degree of DOCTOR OF PHILOSOPHY in Biochemistry C", dissertation, 1 March 1997 (1997-03-01), pages 1-79, XP055216739, blackburg, virginia Retrieved from the Internet: URL:http://scholar.lib.vt.edu/theses/avail able/etd-29813252972830/unrestricted/etd1. pdf [retrieved on 2015-09-28]

## Description

The invention relates to a chemical analysis apparatus, comprising a liquid flow train assembly for creating a flowing liquid sample stream guided from a sample inlet through the apparatus in a capillary tubing arrangement at low liquid flow rates, the sample containing an analyte to be measured, the apparatus further comprising reagents dosing and injection means, located downstream the inlet, for introducing a series of chemical reagents into the sample stream, the apparatus further comprising reactor means where the reagents are reacting with the analyte for producing a coloured chemical indicator in the fully reacted sample, the apparatus further comprising detection means for measuring the chemical indicator, said detection means being located downstream the reactor means and being configured to receive the fully reacted sample with the coloured indicator from the reactor means, according to the preamble of claim 1.

The invention relates particularly to a continuous measurement chemical analyser for water quality monitoring.

A known continuous chemical analyser platform for water quality measurement is based upon a temperature-controlled continuously flowing sample stream into which is introduced a series of chemical reagents in a fixed sequence. The analyser platform is designed to measure a number of different analytes depending on the reagents used.

US 2007/116601 A1 discloses a device for handling small amounts of samples and utilizes the principle of using sample aliquots in a carrier liquid.

As an example, in a continuous chemical analyser for silica, the reaction sequence for the measurement is as follows:
1) First acidification of silica in sample
2) Reaction of silica in sample with molybdate reagent to form yellow β-molybdosilicic acid
3) Second acidification to prevent the formation of further β-molybdosilicic acid
4) Reduction of yellow β-molybdosilicic acid to the blue molybdosilicic acid complex
5) Measurement of the absorbance of blue molybdosilicic acid

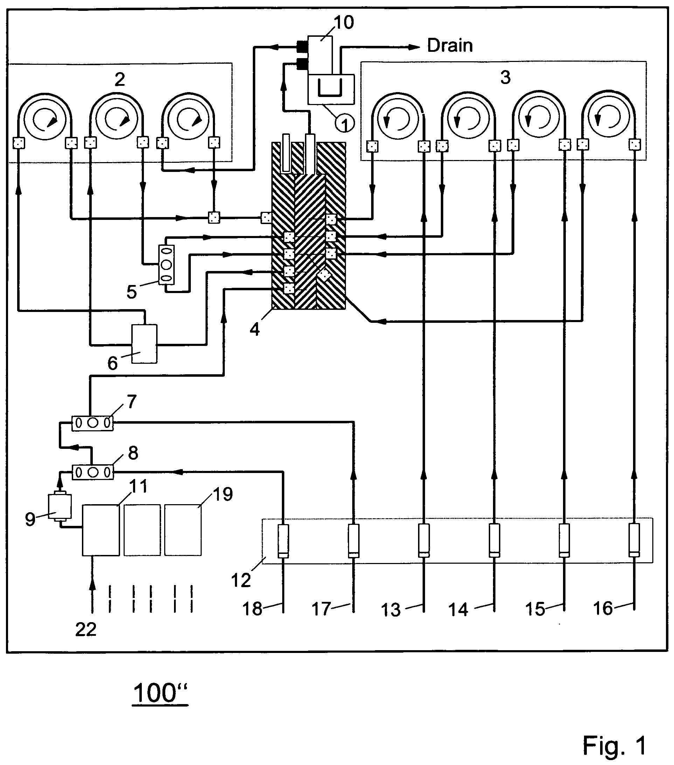

Under this scenario the analyte of interest is carried in the sample stream through the analyser's thermostatically maintained reaction coil at a controlled liquid flow-rate and reacts with each of the inflowing reagents in turn. The linear distance between the inflow junctions of the reagents together with the set liquid flow rate and control temperature determines the incubation time and conditions required for each of the specific reactions in the sequence. At the end of the sequence, the resulting developed coloured indicator substance, here blue molybdosilicic acid, passes through the measuring cuvette. The colour intensity of the indicator substance is determined at a specific wavelength and is proportional to the concentration of the analyte of interest in the sample under test. When required, a calibrant solution or a cleaning solution can be substituted for the sample to calibrate or clean the analyser. Figure 1 shows the principle of operation of such a known continuous analyser device.

One advantage embodied in the known design is the possibility to design it for extremely low reagent usage allowing the analyser to run unattended for several months without the requirement to refill reagent reservoirs. This can be achieved through miniaturisation of the liquid flow train using capillary tubes and a lowering of the liquid flow rates within the analyser. Flow rates from 15 µl min⁻¹ to 240 µl min⁻¹ are an example for the reagents and sample respectively to achieve such long unattended operation times.

The internal diameter of the thermostatically maintained reaction coil and other tubing in the liquid flow train are in the case of the example above approximately 1 mm. However, the capillary reactor system with its narrow bores can produce noisy signals as a result of entrained air and poor mixing.

Under good homeostatic control, dissolved gasses in typical samples under test outgas from solution in the analyser's pre-heating capillary coil and are removed in a primary debubbler. Bubbles resulting from further outgassing of the sample, as it passes through the capillary reaction coils, are removed in a secondary debubbler which is placed immediately upstream of the measuring cuvette. Outgassed bubbles are carried along in the liquid flow train until they emerge in the debubblers where they are removed. As the bubbles travel along the reaction capillary coil, they alter how the reagents mix into the flowing sample.

Even though the bubbles do not pass through the cuvette, the effect they have on the reaction due to an interruption of mixing is detected optically in the cuvette as a temporary bipolar change in the colour intensity or refraction produced in the flowing stream, detected as a spike. Such spiking of the measured signal would be observed as a noisy measurement and is not acceptable in operation. Such noisy signals limit the resolution of the measurement and spikes could falsely trigger instrument process alarms. The characteristic of this bubble-related spike is consistent during the analyser's operation to the extent that under normal measurement conditions it can be recognised and removed through the application of a custom digital signal processing (DSP) algorithm to yield a less noisy measurement.

Although under normal operating conditions a DSP algorithm significantly improves the quality of the measured signal through the removal of the bubble-related spike, certain analyser conditions or modes of analyser operation can change the characteristic of the bubble-related spike such that the DSP algorithm may no longer be able to fully smooth out the measured signal.

With the silica instrument for example, during calibration and auto-zero operations, if the DSP algorithm fails to fully eliminate the bubble-related spike, an incorrect drift compensation or silica compensation offset will be applied to the signal resulting in small measurement errors. If this happens during sequential calibrations or auto-zero operations, the measured value will be seen to make small step changes (either showing increased or decreased silica concentration). Potentially this could result in a below zero silica measurement.

When the silica instrument is operating in multi-stream mode, where up to six different sample streams can be switched into the liquid flow train as the measured sample flowing into the instrument, the time to apply a DSP algorithm is short with very little data available to the algorithm. The result of this is that if a bubble-related spike occurs at the point the multi-stream DSP algorithm is analysing the data, an incorrect measurement may be returned from the algorithm due to the reduced quality of the available signal data.

When a silica analyser has been running for several days or weeks, depending on the nature of the sample and analyte concentration, the capillary tubing can adsorb insoluble materials that subtly change the surface of the tubes and subsequently alter the characteristic of the bubble-related spike. If such changes are significant, the DSP algorithm could no longer recognise the bubble-related spike, fail to fully eliminate its effects and an unacceptably noisy measured signal would be seen as a result.

On occasions bubbles passing through the reaction coils could become variable in size and appear at varying frequencies. This means that the bubble-related spikes would also variable in character and as a consequence they might not be filtered out fully by a DSP algorithm. The same situation may occur when two or more bubbles are travelling through the reaction coils in close proximity to one another. In this case, a DSP algorithm may not filter out the resulting bubble-related spikes because they could not be recognised as perturbations that should be filtered out.

It is therefore the object of the present invention to suggest a chemical analysis apparatus with reduced measurement noise and improved reliability of the measurement, with reduced bubble-related spiking of the measurement signal.

According to the invention the above object is achieved by a chemical analysis apparatus with the features of claim 1.

According to the invention, the flow train assembly is configured to intermittently let the fully reacted sample pass through the detection means at times when the measurement of the indicator is not made, and to bypass the detection means at times when the measurement of the chemical indicator in the sample contained within the detection means is made.

The advantage of the design according to the invention is that the measurement is made when the fully reacted sample is positioned within, but not flowing through, the measurement cuvette. Such a design has been found to reduce the measurement noise to a low value and to eliminate the effects of bubble-related spikes in the measurement.

Advantageous embodiments are described in the characteristic features of the dependent claims.

According to an advantageous embodiment of the invention, the apparatus further comprises a flow diversion valve assembly, said valve assembly being located upstream the detection means and downstream the reactor means, said valve assembly being configured to let the fully reacted sample pass through the detection means at a first time interval when the measurement is not being made, and to let the sample flow pass by the detection means, leaving the sample inside the detection means in a static state at a second time interval when the measurement is being made.

So advantageously the design according to the invention interposes a flow-diversion valve downstream of the secondary debubbler and immediately upstream of the measuring cuvette.

At such times when the measurement is not being made, the flow diversion valve is switched to allow the flowing, fully reacted sample, to pass through the cuvette; thus refreshing the sample.

When the measurement is to be made, the flow of fully reacted sample is diverted by the flow diversion valve to waste. In so doing, the last contemporary, fully reacted sample, remains in a static state in the measuring cuvette and the measurement is then made under quiescent conditions.

In chemical analysis aparatusses, the entire flow of reacting sample through the whole reactor chain has to be stopped for the measurement.

According to the invention, diverting the fully reacted sample to waste whilst the measurement is in progress allows beneficially the reaction chemistry to continue uninterrupted, in the background, in the capillary reactor and ensures that the next sample measurement is made on a contemporary sample.

In this way the sample switching and reaction chemistry is allowed to proceed continuously but the measurement is made intermittently on the background of continuous sampling and continuous reaction chemistry.

This mode of measurement is especially effective in producing an accurate measurement when operating the instrument in multi-stream mode. This is because time consuming and very complex software filtering, that would otherwise be required, is eliminated; thus preserving the shortest possible response time between un-segmented continuous samples.

As explained above, one of the main contributors to measurement noise is entrained air bubbles in the reacted sample stream. These can be removed in a primary debubbler which would be situated upstream of the reaction coils and in a secondary debubbler module which would be situated downstream of the reaction coils but upstream of the measuring cuvette.

According to a further advantageous embodiment of the invention, the valve assembly comprises a valve body and a valve manifold module, whereby the valve manifold module incorporates a debubbler means.

According to a further advantageous embodiment of the invention, the detection means is coupled to the valve manifold module.

The advantage of this embodiment of the invention is that the secondary debubbler is mouted immediately upstream the measuring cuvette, with a very short flow distance between the secondary debubbler and the measuring cuvette. The secondary debubbler is designed as part of a single combination module that incorporates the stopped-flow divert valve manifold such that the flow diversion valve assembly is interposed directly between the secondary debubbler and the cuvette. In this way the design ensures that there is a minimum of liquid dead volume in the assembly. It has been found that this design results in a particularly accurate low-noise measurement,

According to a further advantageous embodiment of the invention, the flow train assembly comprises further a flow-through pre-heater module, located upstream the reactor means, but separate and thermally insulated from the reactor means.

The advantage of this embodiment is that the temperature of the pre-heating of the sample can be set independent from the temperature of the reactor means. In prior art chemical analysis apparatuses, the pre-heater always is thermally connected to the reactor means, thus not allowing to set the temperature of the pre-heated sample independent from the temperature within the reactor means, for example to a higher value than inside the reactor means.

According to a further advantageous embodiment of the invention, the pre-heater module is configured to raise the temperature of sample stream to a higher temperature than the reaction temperature in the reactor means.

According to a further advantageous embodiment of the invention, the flow train assembly further comprises a primary debubbling means, located downstream the pre-heater module and upstream the reactor means.

So the physical separation and distinction of the pre-heater module from the reactor module or reactor means advantageously allows to raise the temperature of the influent sample before it passes through the primary debubbler module. Preferably, for a short period of time, the sample temperature is raised to a higher temperature than that maintained in the reactor means, for example a capillary flow-through reactor.

This has the effect of forcing dissolved gasses out of solution to form physical bubbles in the flowing stream. The resulting bubbles carried in the sample stream are removed from the sample stream when it passes through the primary debubbler.

This operation ensures that most of the dissolved and entrained gasses, contained in the sample before it enters the analyser, are removed from the sample before it enters the reactor means, for example a capillary flow-through reactor, where it encounters the reagents.

It has been found particularly advantageous to first raise the sample to a significantly higher temperature than the subsequent reaction temperature. This is because even if the sample is pre-equilibrated to the same temperature as the reaction temperature before the primary debubbler, there can still remain some residual gasses dissolved in the sample that are subsequently forced out of solution when the reagents, with higher ionic strength, meet and mix with the sample. At the point that happens, the sample has already passed the primary debubbler and these so formed air bubbles can not be removed and have a detrimental effect on the measurement as explained earlier.

When a pre-heater is employed, virtually all of the dissolved gas, e.g.air, originally dissolved in the sample, is forced out of solution and removed before the sample cools to the reaction temperature and mixes with the reagents - in this case there is virtually no residual dissolved gas, e.g.air, left in the sample that can be forced out of solution by the higher ionic strength of the reagents.

The intermittent or stopped flow measurement technique and incorporation of a pre-heater module according to the invention may be used with different embodiments of reactor means according to the invention: either with the capillary flow-through reactor or with the sequential flow-through stirred reactors; or with any other continuous or discontinuous flow-through reactor methodology or design.

So according to a further advantageous embodiment of the invention, the reactor means is a capillary flow-through reactor.

According to a further advantageous embodiment of the invention, the reactor means is a sequential series of reaction chambers for sequentially segmenting the reaction of the reagents with the analyte into a series of partial reactions. The advantageous characteristics of such a sequentially segmented reactor arrangement is that reactants in each of the segmented reactors are allowed to enter the lower region of the chamber and, based on the flow rates, have a residence time within the chamber such that the desired reaction is substantially completed by the time the contents flows out of the chamber respectively into the next sequential reaction chamber in series.

According to a further advantageous embodiment of the invention, each reaction chamber is connected to at least one of the reagents dosing and injection means, whereby in each reaction chamber at least one of the partial reactions is performed.

According to a further advantageous embodiment of the invention, each of the reaction chambers comprises active stirring means.

According to a further advantageous embodiment of the invention, active stirring means are mechanical stirring means for mechanically stirring the sample and reagents or comprise at least a magnetic follower agitated by a magnetic drive coupling device.

So according to this invention the chemical analysis apparatus consists of a temperature-controlled continuous or discontinuous flow-through reactor through which sample, containing the analyte of interest, flows continuously. Reagents are introduced in an ordered sequence to produce a coloured chemical indicator, and the indicator is measured in a stopped-flow mode in a through optical sensor. The colour intensity of the indicator is proportional to the concentration of the analyte of interest. Consequently the signal is very much quieter, eliminating the measurement errors resulting from bubble-induced noise.

The design according to the invention is especially useful in relation to continuous, semi-continuous or discontinuous chemical analysers where solutions are required to mix together, actively or passively, in restricted volumes. It is a requirement for the development of chemical analysis apparatuses for use in the process or water and waste water industry to increase the time intervals between service. This can be achieved by reducing the consumption of consumables like reagents in the instrument. This again leads to the need to reduce the size of the tubing applied in the analysis apparatus, and to reduce the flow rates and volumes affected. Most typically, analysers incorporating capillary or small-bore tubing will be susceptible to measurement noise and inaccuracies in relation to entrained gas, e.g. air, air bubbles. Such problems with gas, e.g. air, bubbles become the more severe, the smaller the scale of the tubing and volumes is. Low liquid flow rates contribute to measurement noise and inaccuracies in relation to entrained gas, e.g.air. It is important not to stop the reaction in the reactor when small volumes are applied.

In case a gas, e.g. air, bubble is entrapped in the flow within a very narrow bore capillary, the flow profile within the capillary will develop a typical bubble glitch, as the flow velocity at the capillary wall is very low, and the flow velocity in the centre of the capillary is much higher that at the boundary. Such a bubble glitch profile is disadvantageous if it happens in a small bore measurement cuvette. So by stopping the flow during measurement in the cuvette, such bubble glitches will have time to equilibrate, improving the measurement accuracy.

The design according to the invention provides the advantage, that, although the analyte solution is in quiescent state in the measuring cuvette during measurement times, the reaction in the reaction flow never stops in the reactor. This is not achievable with known devices.

The invention will be described in greater detail by description of an embodiment with reference to the accompanying drawings, wherein
- Fig. 1: shows the principle of operation of a prior art chemical analyser,
- Fig. 2: shows the principle of operation of a chemical analyser according to a first embodiment of the invention, with a capillary tube reactor,
- Fig. 3: shows the principle of operation of a chemical analyser according to a second embodiment of the invention, with a sequential flow-through stirred reactor,
- Fig. 4: shows a schematic view of a valve manifold module incorporating a debubbler, according to an embodiment of the invention,
- Fig. 5: shows a manifold module in combination with a valve body,
- Fig. 6: shows the assembly of a valve module with a valve and with a measuring cuvette, and
- Fig. 7: shows a blow-up scheme of a pre-heater module according to an embodiment of the invention.

Figure 1 shows a chemical analysis apparatus 100" for silica monitoring according to prior art. A peristaltic pump arrangement 2 is driving a flowing liquid sample stream from a sample inlet 22 to a drain. The liquid sample enters the inlet 22 at a constant-head unit 11.

For operation in a multi-stream mode several sample inlet lines are foreseen, each sample line entering one of additional constant head units 19. After passing through an in-line filter 9 the liquid flow train passes through a cleaning solution solenoid valve 8, which has a cleaning solution feeding port which is fed via a level sensor and filter 12 and a cleaning solution inlet 18 out of a cleaning solution reservoir, which is not shown in the figure.

Downstream of the cleaning solution solenoid valve 8 there is a calibration solenoid valve 7, which has a calibration solution feeding port which is fed via a level sensor and filter 12 and a calibration solution inlet 17 out of a calibration solution reservoir, which is not shown in the figure.

Further downstream the calibration solenoid valve 7 the sample flow stream enters the lower part of a capillary flow-through reactor 4, which is pre-heated to a reaction temperature, chosen in adaption to the specific chemical reaction and usually above ambient temperature. The heater arrangement is not shown in the figure, but is is arranged in such a way that the whole reactor 4 is kept homogenously on the reaction temperature.

The pre-heated sample leaves the reactor 4 to enter into a primary debubbler 6, downstream of which it is driven by one of the peristaltic pumps 2 to a zero calibration solenoid valve 5. Downstream the zero calibration solenoid valve the sample stream again enters the reactor 4. Here a series of chemical reagents is introduced to the sample in a fixed sequence. Each reagent enters via a reagent dosing and injection means, driven by one of the peristaltic reagent pumps 3, fed via a level sensor and filter 12 out of a reagent reservoir, which are not shown in the figure. First reagent is a first acid reagent 16, for first acidification of silica in the sample. Second reagent is ammonium molybdate reagent 15 for reaction of silica in the sample with the molybdate reagent to form yellow β-molybdosilicic acid. Third is a second acid reagent 14 for second acidification to prevent the formation of further β-molybdosilicic acid. Fourth is a reduction reagent for reduction of yellow β-molybdosilicic acid to the blue molybdosilicic acid complex. The fully reacted sample leaves the reactor 4 to enter into a secondary debubbler 10, which is located downstream close to the measuring cuvette 1, where the measurement of the absorbance of blue molybdosilicic acid takes place.

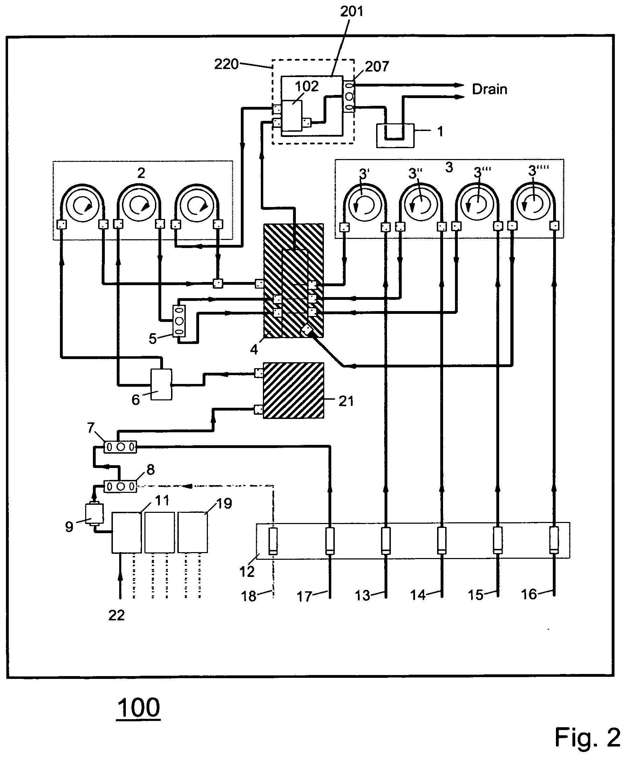

Figure 2 shows a first embodiment of a chemical analysis apparatus 100 according to the invention. It differs from the apparatus shown in figure 1 in two aspects. Firstly, there is a flow-through pre-heater module 21 arranged downstream the calibration solenoid valve 7 and upstream the primary debubbler 6, which separate and thermally insulated from the reactor 4. The separate pre-heater module 21 is configured to set the sample temperature independently from the temperature in the reactor, particularly to raise the temperature of the sample stream upstream of the primary debubbler 6 to a higher temperature than the reaction temperature in the reactor 4.

Secondly, at the outlet of the reactor 4 the fully reacted sample stream enters a flow diversion valve assembly 220, which is located upstream the detection means 1 and downstream the reactor means 4. The valve assembly 220 is configured to let the fully reacted sample pass through the detection means 1 at a first time interval when the measurement is not being made, and to let the sample flow pass by the detection means 1, leaving the sample inside the detection means 1 in a static state at a second time interval when the measurement is being made.

The flow diversion valve assembly 220 comprises a divert valve body 207 and a divert valve manifold module 201, whereby the divert valve manifold module 201 incorporates a debubbler chamber 102, so that the secondary debubbler is integrally formed as part of the diversion valve assembly.

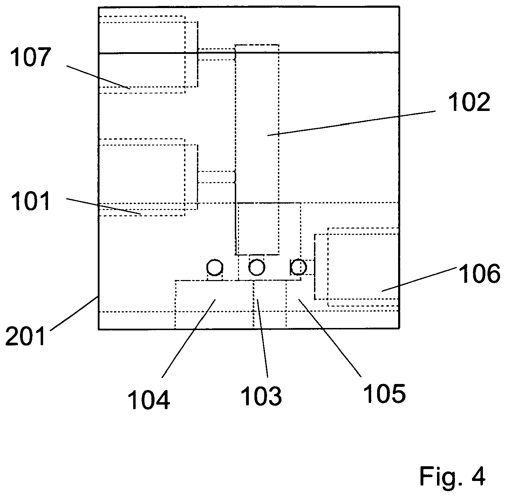

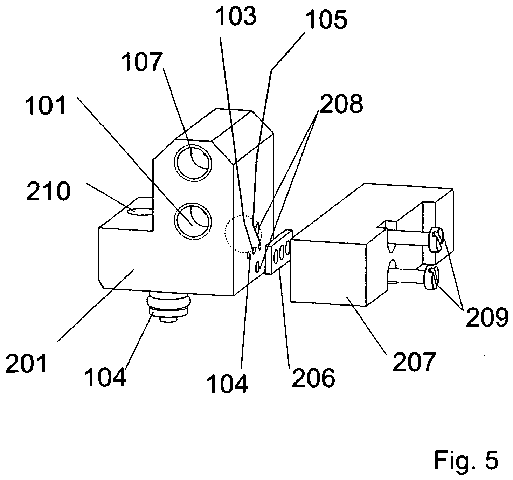

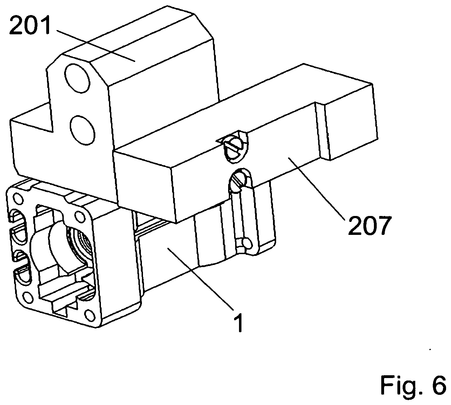

Figure 4 shows in more detail a schematic view of a divert valve manifold 201. Figure 5 shows how the divert valve manifold 201 is coupled to a divert valve body 207. Figure 6 shows the assembled sub-unit comprising the divert valve manifold 201, the valve body 207 and the measuring cuvette 1. The divert valve body 207 is fixed to the divert valve manifold module 201 via two divert valve mounting screws 209 which are held in divert valve mounting holes 208 in the divert valve manifold 201. A divert valve gasket 206 provides a fluid-tight connection. The measurement cuvette 1 is fixed to the divert valve manifold 201 via a cuvette mating screw which passes through a recess 210 for module to cuvette mating screw.

The fully reacted, developed sample solution enters the divert valve manifold 201 at the developed solution inflow port 101 and passes through the integrated debubbler chamber 102. Removed gas bubbles leave through the air outflow port 107. Through a divert valve inflow port 103 the degassed sample solution enters the valve body 207. In the time when no measurement is made, the sample flow is fed from the valve body 207 to the cuvette 1 through a divert valve outflow port 104 to the cuvette 1. In the time when the measurement is made, the sample stream is bypassing the measurement cuvette 1 and fed through the divert valve outflow valve to waste 105 and the waste outflow port 106 to the waste.

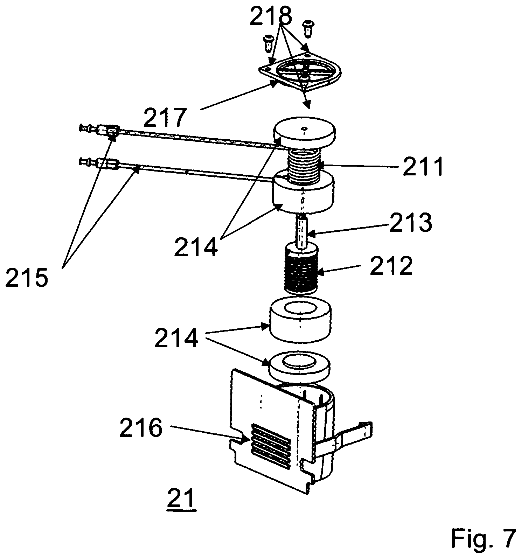

Figure 7 shows an exploded view of the pre-heater module 21. A pre-heater enclosure 216, covered by a pre-heater enclosure lid 217, fixed with pre-heater enclosure fastening screws 218, contains the pre-heater capillary coil 211 with its tube fittings 215 and which is held between pieces of insulation material 214. The pre-heater capillary coil 211 is wound in the form of a cylindrical coil, inside its core there is positioned a pre-heater bobbin 212 with the heater element 213 with temperature sensor and thermal cut-out.

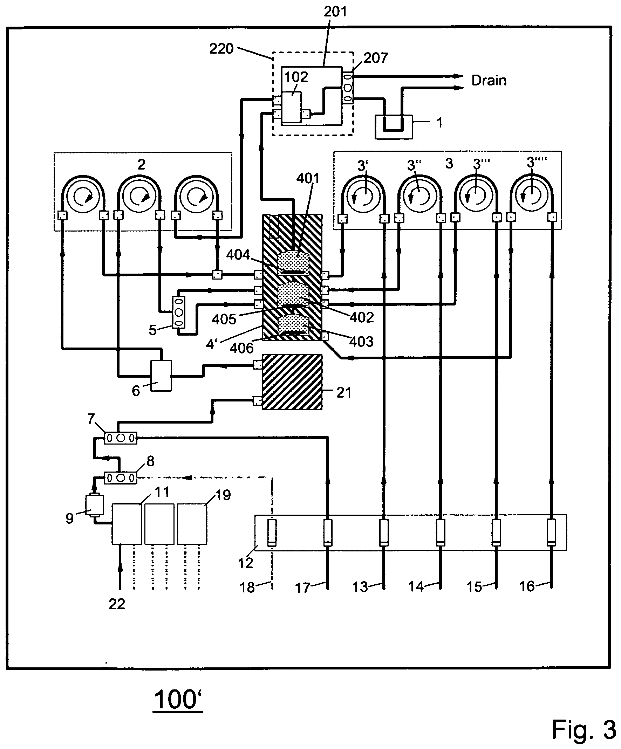

Figure 3 shows a further embodiment of the invention, where the reaction means is realised in the form of a sequential flow-through stirred reactor 4', comprising a sequential series of reaction chambers 401, 402, 403 for sequentially segmenting the reaction of the reagents with the analyte into a series of partial reactions. Each of the reaction chambers comprises active stirring means 404, 405, 406.

The chemical measuring apparatus 100' shown in figure 3 comprises a series of three reaction chambers which are used to segment the reactions required to convert analyte concentration into a measureable colour.

Each of the three reactors is stirred mechanically. This can be achieved in a number of ways. One way is to apply a chemically inert magnetic follower within each reaction chamber which is agitated using an induction coil to achieve magnetic coupling.

Alternatively the magnetic drive coupling could be provided by a single rotating spindle with magnetic nodes positioned so as to achieve magnetic coupling for each of the reactor chamber stirrers.

Other means of stirring the contents could be by direct agitation using a paddle, wand, helix or brush. These could be driven by direct means using a shaft connected to a rotating motor, a reciprocating motor or a motor with an offset weight.

Other means to agitate or stir the reactor contents could be by using Piezo or acoustic devices to induce mechanical movement in the reaction chambers.

Alternatively or in addition to the stirring means described above, a further embodiment is to inject air into the reaction chambers. The air pressure and air flow may be chosen such that the air injection by itself will provide sufficient agitation to homogenise the reactants. The air pressure and air flow may also be chosen such that it supports the agitation and homogenisation provided by the other stirring means described above. The air injection is designed such that the air is passing through the sequential reactors and is removed downstream by the debubbler chamber 102..

The desired characteristics of the reaction chambers according to the embodiment of the invention are that they allow the reactants to enter the lower region of the chamber and based on the flow rates, have a residence time within the chamber such that the desired reaction is substantially completed by the time the contents flow out of the chamber.

The assumption is that each reaction achieves homogeneity within the residence time of the reactor concerned.

The continuous flow of sample and reagents within the segmented reactor design assures that bubbles passing through the system are unable to influence the reactions and hence the extent of colour developed. In this way when a bubble finally leaves the reactor system and enters the secondary debubbler in the flow diversion valve assembly 220 before the reaction stream passes through the cuvette, there will be no residual colour- or refractive index-based perturbation to pass through the cuvette and interrupt the measurement.

This relative immunity to bubbles is achieved because bubbles are unable to disrupt the active mixing process of reagents with sample and because the bubbles themselves pass directly through the reactors and into the secondary debubbler without significant hang-up in the reactor system.

So the system according to the invention is less influenced by variations in liquid flow rate and will yield a more stable measurement as a result.

### List of reference signs

- 1: Measuring cuvette
- 2: Peristaltic Pump (Sample)
- 3, 3', 3", 3"', 3"": Peristaltic Pump (Reagent)
- 4: Capillary flow-through reactor
- 4': sequential flow-through stirred reactor
- 5: Zero calibration solenoid valve
- 6: Primary debubbler
- 7: Calibration solenoid valve
- 8: Cleaning solution solenoid valve
- 9: In-line filter
- 10: Secondary debubbler
- 11: Constant-head units
- 12: Level sensors and filters
- 13: Reduction reagent
- 14: Second acid reagent
- 15: Ammonium molybdate reagent
- 16: First acid reagent
- 17: Calibration solution
- 18: Cleaning solution
- 19: Constant-head units - additional samples
- 21: Pre-heater module
- 22: sample inlet
- 100, 100', 100": chemical analysis apparatus
- 101: Developed solution inflow port
- 102: Debubbler chamber
- 103: Divert valve inflow port
- 104: Divert valve outflow port to cuvette
- 105: Divert valve outflow valve to waste
- 106: Waste outflow port
- 107: Air outflow port
- 201: divert valve manifold module
- 206: Divert valve gasket
- 207: Divert valve body
- 208: Divert valve mounting holes
- 209: Divert valve mounting screws
- 210: Recess for module to cuvette mating screw
- 211: Pre-heater capillary coil
- 212: Pre-heater bobbin
- 213: Heater element with temperature sensor and thermal cut-out
- 214: Insulation material
- 215: Tube fittings
- 216: Pre-heater enclosure
- 217: Pre-heater enclosure lid
- 218: Pre-heater enclosure fastening screw
- 220: flow diversion valve assembly
- 401: reaction chamber
- 402: reaction chamber
- 403: reaction chamber
- 404: active stirring means
- 405: active stirring means
- 406: active stirring means

## Claims

1. Chemical analysis apparatus (100), comprising a liquid flow train assembly for creating a flowing liquid sample stream guided from a sample inlet (22) through the apparatus (100) in a capillary tubing arrangement at low liquid flow rates, the sample containing an analyte to be measured, the apparatus further comprising reagents dosing and injection means, located downstream the sample inlet (22), for introducing a series of chemical reagents into the sample stream, the apparatus further comprising reactor means (4) where the reagents are reacting with the analyte for producing a coloured chemical indicator in the fully reacted sample, the apparatus further comprising detection means (1) for measuring the chemical indicator, said detection means (1) being located downstream the reactor means (4) and being configured to receive the fully reacted sample with the coloured indicator from the reactor means (1),
**characterized in that** the flow train assembly is configured to intermittently let the fully reacted sample pass through the detection means (1) at times when the measurement of the indicator is not made, and to bypass the detection means (1) at times when the measurement of the chemical indicator in the sample contained within the detection means is made.

2. Chemical analysis apparatus according to claim 1,
**characterized in that** the apparatus further comprises a flow diversion valve assembly (220), said valve assembly (220) being located upstream the detection means (1) and downstream the reactor means (4), said valve assembly (220) being configured to let the fully reacted sample pass through the detection means (1) at a first time interval when the measurement is not being made, and to let the sample flow pass by the detection means (1), leaving the sample inside the detection means (1) in a static state at a second time interval when the measurement is being made.

3. Chemical analysis apparatus according to claim 2, **characterized in that** the flow diversion valve assembly (220) comprises a divert valve body (207) and a divert valve manifold module (201), whereby the divert valve manifold module (201) incorporates a debubbler chamber (102).

4. Chemical analysis apparatus according to claim 3, **characterized in that** the detection means (1) is coupled to the divert valve manifold module (201).

5. Chemical analysis apparatus according to claim 1, **characterized in that** the flow train assembly comprises further a flow-through pre-heater module (21), located upstream of, separate and thermally insulated from the reactor means (4).

6. Chemical analysis apparatus according to claim 5, **characterized in that** the flow train assembly further comprises a primary debubbling means (6), located downstream the pre-heater module (21) and upstream the reactor means (4).

7. Chemical analysis apparatus according to claim 5, **characterized in that** the pre-heater module (21) is configured to raise temperature of sample stream to a higher temperature than the reaction temperature in the reactor means (4).

8. Chemical analysis apparatus according to claim 1, **characterized in that** the reactor means (4) is a capillary flow-through reactor.

9. Chemical analysis apparatus according to claim 1, **characterized in that** the reactor means (4') is a sequential series of reaction chambers (401, 402, 403) for sequentially segmenting the reaction of the reagents with the analyte into a series of partial reactions.

10. Chemical analysis apparatus according to claim 9, **characterized in that** each reaction chamber is connected to at least one of the reagents dosing and injection means, whereby in each reaction chamber at least one of the partial reactions is performed.

11. Chemical analysis apparatus according to claim 9, **characterized in that** each of the reaction chambers comprises active stirring means (404, 405, 406).

12. Chemical analysis apparatus according to claim 11, **characterized in that** active stirring means (404, 405, 406) are mechanical stirring means for mechanically stirring the sample and reagents or comprise at least a magnetic follower agitated by a magnetic drive coupling device.

13. Chemical analysis apparatus according to claim 9, **characterized in that** means are provided for injecting air into the reaction chambers to support agitation and homogenisation of the reactants.

14. Chemical analysis apparatus according to claim 13, **characterized in that** the means for injecting air into the reaction chambers are designed such that the air is passing through the sequential reactors and is removed downstream by the debubbler chamber (102).

## Patentansprüche

1. Chemische Analysevorrichtung (100), die eine Strömungsstranganordnung für Flüssigkeiten zum Erzeugen einer fließenden Flüssigkeitsprobenströmung umfasst, die von einem Probeneinlass (22) durch die Vorrichtung (100) in eine Kapillarrohreinrichtung bei niedrigen Flüssigströmungsraten geführt wird, wobei die Probe ein zu messendes Analyt enthält, wobei die Vorrichtung außerdem Reagenzdosierungs- und Injektionselemente umfasst, die nachgeschaltet zu dem Probeeinlass (22) angebracht sind, um eine Reihe von chemischen Reagenzien in den Probenstrom einzuführen, wobei die Vorrichtung außerdem ein Reaktorelement (4) umfasst, in dem die Reagenzien mit dem Analyt reagieren, um einen gefärbten chemischen Indikator in der vollständig reagierten Probe zu erhalten, wobei die Vorrichtung außerdem ein Erfassungselement (1) zum Messen des chemischen Indikators umfasst, wobei das Erfassungselement (1) nachgeschaltet zu dem Reaktorelement (4) angebracht ist und konfiguriert ist zum Empfangen der vollständig reagierten Probe mit dem gefärbten Indikator von dem Reaktorelement (1),
**dadurch gekennzeichnet, dass** die Strömungsstranganordnung konfiguriert ist, um die vollständig reagierte Probe das Erfassungselement (1) zu Zeiten intermittierend durchqueren zu lassen, wenn die Messung des Indikators nicht ausgeführt wird, und um das Erfassungselement (1) zu Zeiten zu überbrücken, wenn die Messung des chemischen Indikators in der Probe ausgeführt wird, die in dem Erfassungselement enthalten ist.

2. Chemische Analysevorrichtung nach Anspruch 1,
**dadurch gekennzeichnet, dass** die Vorrichtung außerdem eine Strömungsverzweigungsventilanordnung (220) umfasst, wobei die Ventilanordnung (220) vorgeschaltet zu dem Erfassungselement (1) und nachgeschaltet zu dem Reaktorelement (4) angebracht ist, wobei die Ventilanordnung (220) konfiguriert ist, um die vollständig reagierte Probe das Erfassungselement (1) in einem ersten Zeitintervall durchqueren zu lassen, in dem die Messung nicht ausgeführt wird, und um die Probenströmung das Erfassungselement (1) in einem zweiten Zeitintervall durchqueren zu lassen, in dem die Probe innerhalb des Erfassungselements (1) in einem statischen Zustand gelassen wird, wenn die Messung ausgeführt wird.

3. Chemische Analysevorrichtung nach Anspruch 2,
**dadurch gekennzeichnet, dass** die Strömungsverzweigungsventilanordnung (220) einen Abzweigventilkörper (207) und ein Abzweigventilverteilermodul (201) umfasst, wobei das Abzweigventilverteilermodul (201) eine Gasblasenentfernungskammer (102) beinhaltet.

4. Chemische Analysevorrichtung nach Anspruch 3,
**dadurch gekennzeichnet, dass** das Erfassungselement (1) mit dem Abzweigventilverteilermodul (201) verbunden ist.

5. Chemische Analysevorrichtung nach Anspruch 1,
**dadurch gekennzeichnet, dass** die Strömungsstranganordnung außerdem ein Durchflussvorheizmodul (21) umfasst, das vorgeschaltet zu, getrennt von und thermisch isoliert von dem Reaktorelement (4) angebracht ist.

6. Chemische Analysevorrichtung nach Anspruch 5,
**dadurch gekennzeichnet, dass** die Strömungsstranganordnung außerdem ein primäres Gasblasenentfernungselement (6) umfasst, das nachgeschaltet zu dem Vorheizmodul (21) und vorgeschaltet zu dem Reaktorelement (4) angebracht ist.

7. Chemische Analysevorrichtung nach Anspruch 5,
**dadurch gekennzeichnet, dass** das Vorheizmodul (21) konfiguriert ist, um die Temperatur des Probenstroms auf eine höhere Temperatur als die Reaktionstemperatur in dem Reaktorelement (4) anzuheben.

8. Chemische Analysevorrichtung nach Anspruch 1,
**dadurch gekennzeichnet, dass** das Reaktorelement (4) ein kapillarer Durchflussreaktor ist.

9. Chemische Analysevorrichtung nach Anspruch 1,
**dadurch gekennzeichnet, dass** das Reaktorelement (4') eine sequenzielle Abfolge von Reaktionskammern ist (401, 402, 403), um die Reaktion der Reagenzien mit dem Analyten sequenziell in eine Reihe von Teilreaktionen zu unterteilen.

10. Chemische Analysevorrichtung nach Anspruch 9,
**dadurch gekennzeichnet, dass** jede Reaktionskammer mit mindestens Einem der Reagenzdosierungs- und Injektionselemente verbunden ist, wobei in jeder Reaktionskammer mindestens eine der Teilreaktionen ausgeführt wird.

11. Chemische Analysevorrichtung nach Anspruch 9,
**dadurch gekennzeichnet, dass** jede der Reaktionskammern ein aktives Rührelement (404, 405, 406) umfasst.

12. Chemische Analysevorrichtung nach Anspruch 11,
**dadurch gekennzeichnet, dass** die aktiven Rührelemente (404, 405, 406) mechanische Rührelemente zum mechanischen Rühren der Probe und der Reagenzien sind oder mindestens ein magnetisches Nachführelement umfassen, das von einer Magnetantriebskupplungsvorrichtung umgerührt wird.

13. Chemische Analysevorrichtung nach Anspruch 9,
**dadurch gekennzeichnet, dass** ein Element zum Injizieren von Luft in die Reaktionskammern bereitgestellt wird, um das Rühren und Homogenisieren der Reaktionspartner zu unterstützen.

14. Chemische Analysevorrichtung nach Anspruch 13,
**dadurch gekennzeichnet, dass** das Element zum Injizieren von Luft in die Reaktionskammern so ausgelegt ist, dass die Luft die aufeinanderfolgenden Reaktoren durchquert und nachgeschaltet in der Gasblasenentfernungskammer (102) entfernt wird.

## Revendications

1. Appareil d'analyse chimique (100), comprenant un ensemble train d'écoulement de liquide pour créer un courant d'échantillon liquide en écoulement guidé depuis une entrée d'échantillon (22) au travers de l'appareil (100) dans un agencement de tube capillaire à des taux d'écoulement de liquide faibles, l'échantillon contenant un analyte à mesurer, l'appareil comprenant en outre des moyens de dosage et d'injection de réactifs, situés en aval de l'entrée d'échantillon (22), pour introduire une série de réactifs chimiques dans le courant d'échantillon, l'appareil comprenant en outre un moyen de réacteur (4) où les réactifs réagissent avec l'analyte pour produire un indicateur chimique coloré dans l'échantillon entièrement réagi, l'appareil comprenant en outre un moyen de détection (1) pour mesurer l'indicateur chimique, ledit moyen de détection (1) étant situé en aval du moyen de réacteur (4) et étant configuré pour recevoir l'échantillon entièrement réagi avec l'indicateur coloré à partir du moyen de réacteur (1), **caractérisé en ce que** l'ensemble train d'écoulement est configuré pour laisser passer par intermittence l'échantillon entièrement réagi au travers du moyen de détection (1) à des moments où la mesure de l'indicateur n'est pas effectuée, et pour contourner le moyen de détection (1) à des moments où la mesure de l'indicateur chimique dans l'échantillon contenu dans le moyen de détection est effectuée.

2. Appareil d'analyse chimique selon la revendication 1, **caractérisé en ce que** l'appareil comprend en outre un ensemble soupape de diversion d'écoulement (220), ledit ensemble soupape (220) étant situé en amont du moyen de détection (1) et en aval du moyen de réacteur (4), ledit ensemble soupape (220) étant configuré pour laisser passer l'échantillon entièrement réagi au travers du moyen de détection (1) à un premier intervalle de temps lorsque la mesure n'est pas effectuée, et pour laisser passer l'écoulement d'échantillon à côté du moyen de détection (1), laissant l'échantillon à l'intérieur du moyen de détection (1) dans un état statique à un deuxième intervalle de temps lorsque la mesure est effectuée.

3. Appareil d'analyse chimique selon la revendication 2, **caractérisé en ce que** l'ensemble soupape de diversion d'écoulement (220) comprend un corps de soupape de diversion (207) et un module de collecteur de soupape de diversion (201), le module de collecteur de soupape de diversion (201) incorporant une chambre de débullage (102).

4. Appareil d'analyse chimique selon la revendication 3, **caractérisé en ce que** le moyen de détection (1) est couplé au module de collecteur de soupape de diversion (201) .

5. Appareil d'analyse chimique selon la revendication 1, **caractérisé en ce que** l'ensemble train d'écoulement comprend en outre un module de préchauffage à écoulement traversant (21), situé en amont, séparé et thermiquement isolé du moyen de réacteur (4).

6. Appareil d'analyse chimique selon la revendication 5, **caractérisé en ce que** l'ensemble train d'écoulement comprend en outre un moyen de débullage primaire (6), situé en aval du module de préchauffage (21) et en amont du moyen de réacteur (4).

7. Appareil d'analyse chimique selon la revendication 5, **caractérisé en ce que** le module de préchauffage (21) est configuré pour augmenter la température du courant d'échantillon à une température plus élevée que la température de réaction dans le moyen de réacteur (4).

8. Appareil d'analyse chimique selon la revendication 1, **caractérisé en ce que** le moyen de réacteur (4) est un réacteur à écoulement traversant capillaire.

9. Appareil d'analyse chimique selon la revendication 1, **caractérisé en ce que** le moyen de réacteur (4') est une série séquentielle de chambres de réaction (401, 402, 403) pour segmenter séquentiellement la réaction des réactifs avec l'analyse en une série de réactions partielles.

10. Appareil d'analyse chimique selon la revendication 9, **caractérisé en ce que** chaque chambre de réaction est connectée à au moins un des moyens de dosage et d'injection de réactifs, au moins une des réactions partielles étant réalisée dans chaque chambre de réaction.

11. Appareil d'analyse chimique selon la revendication 9, **caractérisé en ce que** chacune des chambres de réaction comprend des moyens d'agitation actifs (404, 405, 406) .

12. Appareil d'analyse chimique selon la revendication 11, **caractérisé en ce que** les moyens d'agitation actifs (404, 405, 406) sont des moyens d'agitation mécaniques pour agiter mécaniquement l'échantillon et les réactifs ou comprennent au moins un suiveur magnétique agité par un dispositif de couplage à entraînement magnétique.

13. Appareil d'analyse chimique selon la revendication 9, **caractérisé en ce que** des moyens sont prévus pour injecter de l'air dans les chambres de réaction afin de supporter l'agitation et l'homogénéisation des réactifs.

14. Appareil d'analyse chimique selon la revendication 13, **caractérisé en ce que** les moyens pour injecter de l'air dans les chambres de réaction sont conçus de telle sorte que l'air traverse les réacteurs séquentiels et est éliminé en aval par la chambre de débullage (102).
